# EUROPÄISCHE PATENTANMELDUNG

(11) **EP 0 559 937 A1**
(43) Veröffentlichungstag der Anmeldung: **15.09.1993**
(21) Anmeldenummer: 92104186.9
(22) Anmeldetag: 11.03.1992
(51) Int. Cl.: B25B 23/14

(54) **Verfahren zum Festziehen eines Schraubverbindungselementes**

(71) Anmelder: SIEMENS AKTIENGESELLSCHAFT, D-80333 München (DE)
(72) Erfinder: Kaiser, Norbert, Dipl.-Phys., W-8542 Roth (DE)

(57) **Zusammenfassung**

Zum Festziehen eines Schraubverbindungselementes wird der Differenzenquotient (delta M/delta W) aus Drehmoment (M) und Drehwinkel (W) in Abhängigkeit von einer Führungsgröße (delta M, delta W) gebildet und der Bereich, in dem der Differenzenquotient einen konstanten Wert aufweist, ermittelt. Das Abschaltdrehmoment (M_{S}), bei dem der Schraubvorgang beendet wird, wird dann direkt aus der Multiplikation des Differenzenquotienten (delta M/delta W) mit einem vorgegebenen Sollwinkel (W_{S}) bestimmt.

## Beschreibung

Beim automatisch gesteuerten Festziehen von Schraubverbindungselementen ergibt sich eine charakteristische Funktion des Drehmoments über dem Drehwinkel. Im Bereich des Kraftschlusses des Schraubverbindungselementes mit den Gewindegängen weist diese Funktion eine innerhalb gewisser Toleranzen konstante Steigung auf (Hook'scher Bereich). In diesem Bereich kann das Schraubverbindungselement optimal angezogen werden.

Aus der deutschen Patentschrift 28 13 565 ist ein Verfahren zum Festziehen eines Schraubverbindungselementes bekannt, bei dem zunächst der Bereich der konstanten Steigung ermittelt wird und dann der Abschnitt konstanter Steigung der Drehmomentdrehwinkelkurve nach rückwärts extrapoliert wird, um durch den Schnittpunkt mit der Drehwinkelachse einen Ausgangsdrehwinkel (Startpunkt der Winkelzählung) zu erhalten. Von diesem Ausgangsdrehwinkel wird dann das Schraubverbindungselement bis zum Ende eines vorgegebenen Winkelabschnitts drehwinkelgesteuert angezogen.

Die Extrapolation vom Bereich konstanter Steigung der Drehmomentdrehwinkelkurve erfordert jedoch einen relativ großen Rechenaufwand, so daß entweder die Geschwindigkeit des Schraubverfahrens oder die Rechnerleistung an dieses Verfahren angepaßt werden müssen.

Es ist daher Aufgabe der Erfindung, ein Verfahren zum Festziehen eines Schraubverbindungselementes anzugeben, das mit einer geringeren Rechenleistung auskommt.

Diese Aufgabe wird durch ein Verfahren zum Festziehen eines Schraubverbindungselementes mit folgenden Schritten erreicht:
- Drehmoment und Drehwinkel werden gemessen,
- der Differenzenquotient aus Drehmoment und Drehwinkel wird gebildet, wobei die Drehwinkeldifferenz vorgebbar ist,
- der innerhalb vorgebbarer Toleranzen liegende, quasi konstante Wert des Differenzenquotienten wird ermittelt,
- das Abschaltdrehmoment der Schraubverbindung wird aus dem konstanten Wert des Differenzenquotienten multipliziert mit einem vorgegebenen Sollwinkel bestimmt,
- das Schraubverbindungselement wird bis zum Erreichen des Abschaltdrehmomentes mittels Drehmomentensteuerung angezogen.

Bei dem Verfahren wird also die konstante Steigung ermittelt und daraus durch Multiplikation mit dem charakteristischen Winkelsollwert das zu erreichende Drehmoment berechnet, so daß das Schraubverbindungselement durch Drehmomentsteuerung angezogen werden kann.

Üblicherweise wird der Differenzenquotient als Verhältnis von Drehmomentzunahme bei vorgegebener Drehwinkelzunahme bestimmt. Bei kleiner Größe der Drehwinkelzunahme hat diese Berechnung jedoch zur Folge, daß durch die Digitalisierung der Meßwerterfassung bei einer numerischen Steuerung ein identischer Drehmomentwert bei zwei verschiedenen Drehwinkelabsolutwerten ermittelt werden könnte. Dies wiederum würde zu einem Quotientenwert von Null führen. Mit anderen Worten: Bei kleinem Wert für die beliebig wählbare Sehnenlänge der Drehwinkelzunahme schwankt der rechnerisch ermittelte Wert für den Differenzenquotient stark. Ein hoher Wert für die Sehnenlänge der Drehwinkelzunahme beruhigt zwar den Gradientenverlauf, führt jedoch zu einer verzögerten Auswertung und damit zu einem zu späten Abschalten des Steuerungssystems. Aus diesem Grund wird nach einer vorteilhaften Ausbildung der Erfindung anstelle der Drehwinkeldifferenz bzw. Drehwinkelzunahme die Drehmomentdifferenz bzw. Drehmomentzunahme vorgegeben. Ist genügend Rechnerleistung vorhanden, läßt sich durch eine weitere Ausbildung der Erfindung der Gradientenverlauf durch mathematische Operationen mit den Führungsgrößen und den daraus abgeleiteten Größen beruhigen, z.B. durch Mittelwertbildung aus dem aktuell ermittelten Gradientenwert mit vorherigen Gradientenwerten.

Alternativ dazu kann diese Methode auf alle zur Variablen "Drehwinkel" direkt proportionalen Größen angewendet werden.

Da im Bereich vor der konstanten Steigung die Drehmomentdrehwinkelkurve mitunter ein sehr unruhiges Verhalten aufweist, das u.a. durch das erste Finden des Gewindegangs und/oder durch Reibungsverluste, die durch Schmutzeffekte entstehen, bedingt ist, kann es sinnvoll seine nach einer weiteren Ausbildung der Erfindung die Bildung des Differenzenquotienten erst ab einem vorwählbaren Startmoment auszuführen.

Das durch die numerische Steuerung beständig ermittelte Drehmoment kann zur Information des Bedieners nach einer weiteren Ausführung der Erfindung in Drehwinkelwerte umgerechnet und angezeigt werden.

Manche Schraubverbindungselemente weisen nicht nur einen, sondern zwei oder mehrere Abschnitte konstanter Steigung auf. In diesem Fall muß es dem Anwender überlassen bleiben, einen der Abschnitte konstanter Steigung für die Abschaltbedingung des Schraubverfahrens auszuwählen. Dies ermöglicht eine vorteilhafte Ausbildung der Erfindung, wobei als Abschaltkriterium für die Drehmomentsteuerung der konstante Differernzenquotient gewählt wird, der innerhalb qualitativ und/oder quantitativ vorgebbarer Toleranzen liegt.

Die Konstanz des Differenzenquotienten wird im einfachsten Fall durch Vergleichsoperationen mit einer wählbaren Anzahl von vorherigen Meßwerten bestimmt, wobei die Größe des Toleranzfensters durch die entsprechende Geberauflösung. bestimmt wird. Alternatic dazu kann diese Vergleichsoperation mit gemittelten Meßwerten erfolgen.

Bei mehreren quasi-konstanten Differenzenquotienten in einer Schraubkurve kann der für diese Schraubfälle typische konstante Differenzenquotient durch weitere Angaben spezifiziert werden; beispielsweise:
1) der konstante Differenzenquotient wird für die Berechnung erst ab Überschreitung eines Schwellwertes der Meßgrößen für gültig erklärt,
2) der konstante Differenzenquotient wird für die Berechnung nur innerhalb eines Wertebereiches der Meßgrößen für gültig erklärt, 3) erst ab dem n-ten quasi konstanten Differenzenquotienten erfolgt die endgültige Festlegung des Abschaltpunktes,
4) der konstante Differenzenquotient muß eine vorgebbare absolute Größe überschritten haben,
5) der konstante Differenzenquotient muß innerhalb gewisser absoluter Grenzen liegen.

Diese zusätzlichen Angaben sind alternativ oder als sinnvolle Kombination vorgebbar.

Das Verfahren wird im folgenden anhand einer Zeichnung naher beschrieben. Dabei zeigen:
- FIG 1: ein Drehmoment-Drehwinkel-Diagramm eines charakteristischen Schraubverlaufs,
- FIG 2: ein Drehmoment-Drehwinkel-Diagramm eines Schraubverlaufs mit drei unterschiedlich konstanten Steigungen.

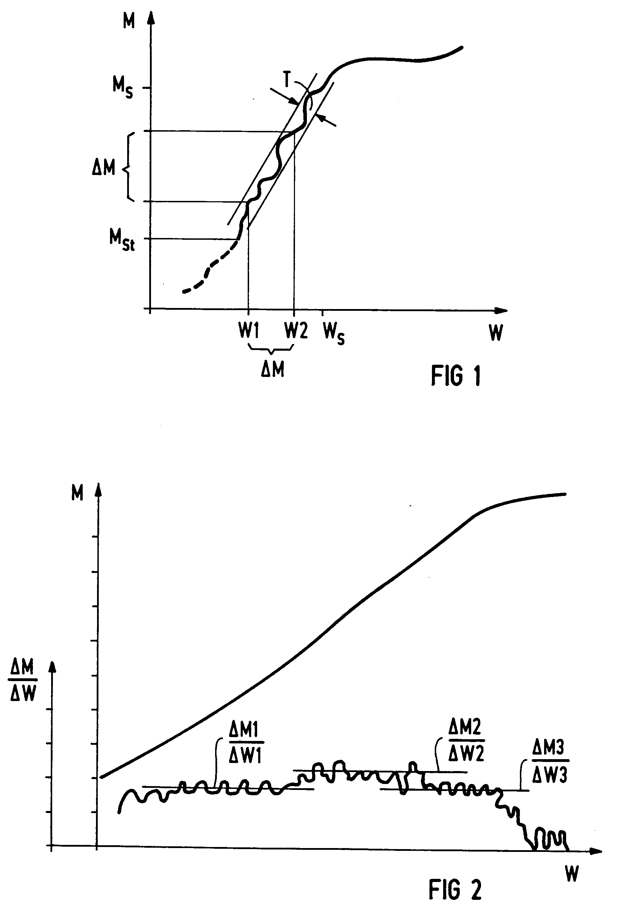

FIG 1 zeigt einen charakteristischen Drehmomentdrehwinkelverlauf, wie er beim Anziehen eines Schraubverbindungselements beispielsweise mit einem Schrauber entstehen würde. Der nicht dargestellte Schrauber weist dabei einen elektronisch steuerbaren Motor und eine dazugehörige Steuerung sowie einen Geber für Drehwinkel und einen Geber für das Drehmoment auf. Die Ausbildung einer Schaltungsanordnung zur Durchführung des Verfahrens läßt sich für den Fachmann aus den Verfahrensschritten und dem Stand der Technik entnehmen.

Der Schraubverlauf einer gegebenen Schraube ist prinzpiell bekannt, so daß auch das Startmoment M_{ST}, bei dem mit der Bildung des Differenzenquotienten begonnen werden soll, vorgegeben werden kann. Dieses Startmoment M_{ST} fällt im Ausführungsbeispiel gemäß FIG 1 mit dem Winkelwert W1 zusammen, an dem der Abschnitt quasi konstanter Steigung der Kurve beginnt. Es ist deutlich zu erkennen, daß die Funktionswerte innerhalb eines Toleranzschlauches T streuen. Von der Steuerung wird dieser Abschnitt jedoch als Bereich konstanter Ableitung erkannt, solange die Funktionswerte den Toleranzschlauch nicht verlassen. Sobald die Steuerung über mehrere vorgebbare Zyklen erkannt hat, daß die Schraube im Bereich der konstanten Steigung angezogen wird, berechnet sie durch Multiplikation des Differenzenquotienten mit dem vorgegebenen Winkelsollwert das Abschaltdrehmoment M_{S}. Der Winkelsollwert W_{S} ist dabei eine charakteristische Größe einer gegebenen Schraube und ist entweder vom Schraubenhersteller fest vorgegeben oder kann durch Messungen ermittelt werden. Wenn das Abschaltdrehmoment M_{S} bestimmt ist, wird das Schraubverbindungselement bis zum Erreichen dieses Abschaltdrehmomentes M_{S} mittels der Drehmomentensteuerung angezogen. Wegen des im Bereich konstanter Steigung direkten Zusammenhang zwischen Drehmoment M und Drehwinkel W kann während des Anziehens der Schraube der zum Drehmomentwert zugehörige Drehwinkel ermittelt und über eine optische Anzeige ausgegeben werden.

FIG 2 zeigt ein Drehmoment-Drehwinkel-Diagramm eines Schraubverlaufs mit drei unterschiedlich konstanten Steigungen. Da die Steigungssprünge dem Drehmoment-Drehwinkeldiagramm nicht unmittelbar entnehmbar sind, ist in FIG 2 zusätzlich das Diagramm des Gradienten delta M/delta W dargestellt, und die gemittelten Geraden der innerhalb eines Toleranzbereiches konstanten Steigungen delta M1/delta W1, delta M2/delta W2 und delta M3/delta W3 sind eingezeichnet. Bestimmte Schraubverbindungselemente weisen nämlich nicht nur einen Bereich konstanter Steigung auf, sondern können zwei oder mehrere Bereiche konstanter Steigung aufweisen. Da nach dem im Zusammenhang mit FIG 1 beschriebenen Verfahren die Schraubsteuerung jedoch bereits bei Erkennung des ersten Steigungsbereich den Drehmomentsollwert bestimmen und nach diesem die Schraube anziehen würde, könnte der Schraubvorgang nicht korrekt ausgeführt werden. Dies wäre dann der Fall, wenn das Abschaltdrehmoment M_{S} erst anhand der zweiten Steigung delta M2/delta W2 oder erst bei einer weiteren Steigung berechnet werden soll. Diese Tatsache muß der numerischen Steuerung vom Bediener vorgegeben werden. Die numerische Steuerung wird im primitivsten Fall die Bereiche konstanter Steigung zählen bis sie den beispielsweise vorgegebenen dritten Bereich delta M3/delta W3 ermittelt. In diesem Bereich wird dann das Solldrehmoment auf gleiche Weise wie anhand von FIG 1 beschrieben, ermittelt und das Schraubverbindungselement mit diesem Abschaltdrehmoment angezogen. Praxisgerechter ist, nur den konstanten Gradienten als Rechengröße auszuwählen, der im Toleranzbereich relativer oder absoluter Vergleichsgrößen liegt; beispielsweise könnte der ermittelte maximale konstante Gradient diese Rechengröße sein. Eine Drehmoment- und Drehwinkelüberwachung ab dem Startmoment ist empfehlenswert.

## Patentansprüche

1. Verfahren zum Festziehen eines Schraubverbindungselementes mit folgenden Schritten:
1.1 Drehmoment (M) und Drehwinkel (W) werden gemessen,
1.2 der Differenzenquotient (delta M/delta W) aus Drehmoment (M) und Drehwinkel (W) wird gebildet, wobei die Drehwinkeldifferenz (delta W) vorgebbar ist,
1.3 der innerhalb vorgebbarer Toleranzen konstante Wert des Differenzenquotienten (delta M/delta W) wird ermittelt,
1.4 das Abschaltdrehmoment (M_{S}) der Schraubverbindung wird aus dem konstanten Wert des Differenzenquotienten (delta M/delta W) multipliziert mit einem vorgegebenen Sollwinkel (W_{S}) bestimmt,
1.5 das Schraubverbindungselement wird bis zum Erreichen des Abschaltdrehmomentes mittels Drehmomentensteuerung angezogen.

2. Verfahren nach Anspruch 1, wobei anstelle der Drehwinkeldifferenz (delta W) die Drehmomentdifferenz (delta M) vorgebbar ist.

3. Verfahren nach Anspruch 1, wobei anstelle der Drehwinkeldifferenz (delta W) eine Kombination aus Drehwinkeldifferenz (delta W) und Drehmomentdifferenz (delta M) vorgebbar ist.

4. Verfahren nach einem der vorstehenden Ansprüche, wobei die Bildung des Differenzenquotienten (delta M/delta W) ab einem vergebbaren Startmoment (M_{ST}) ausgeführt wird.

5. Verfahren nach einem der vorstehenden Ansprüche, wobei das ermittelte Drehmoment (M) in Drehwinkelwerte (W) umgerechnet und diese angezeigt werden.

6. Verfahren nach einem der vorstehenden Ansprüche, wobei als Abschaltkriterium für die Drehmomentsteuerung, z.B. bei mehreren unterschiedlichen Differenzenquotienten (delta M1/delta W1, delta M2/delta W2, delta M3/delta W3) der konstante Differenzenquotient (delta M/delta W) gewählt wird, der innerhalb qualitativ und/oder quantitativ vorgebbarer Toleranzen liegt.
